Europäisches Patentamt

European Patent Office

Office européen des brevets

(11) Publication number: **0 353 957 A1**

## EUROPEAN PATENT APPLICATION

(21) Application number: **89307683.6**

(22) Date of filing: **27.07.89**

(51) Int. Cl.⁴: **C23C 22/73 , C09J 5/02**

(30) Priority: **28.07.88 GB 8818023**

(43) Date of publication of application:
**07.02.90 Bulletin 90/06**

(84) Designated Contracting States:
**DE ES FR GB IT SE**

(71) Applicant: **The British Petroleum Company p.l.c.**
**Britannic House Moor Lane**
**London EC2Y 9BU(GB)**

(72) Inventor: **Cayless, Richard Arthur**
**The British Petroleum Company p.l.c.**
**Chertsey Road**
**Sunbury-on-Thames Middlesex TW16 7LN(GB)**

(74) Representative: **Ryan, Edward Terrence et al**
**BP INTERNATIONAL LIMITED, Patents Division Chertsey Road**
**Sunbury-on-Thames Middlesex, TW16 7LN(GB)**

(54) **Surface treatment of metals.**

(57) Metals having surface oxide layers are treated with an aqueous medium containing chromium released from alumina particles which have been previously prepared so as to have chromate anions releasably bound to the alumina.

EP 0 353 957 A1

## SURFACE TREATMENT OF METALS

This invention relates to the surface treatment of metals. Various treatments of metal surfaces using metal salts or complexes are known. In particular these may be used to enhance the corrosion resistance of the metal surface or the receptivity to subsequently applied coatings. For example oxyanions such as phosphate, oxalate, arsenate or chromate can be used and applied using a variety of techniques. Such coatings are usually referred to as conversion coatins and in nearly all cases are more than 0.1 micrometres thick, and will typically be approximately 1 micrometer thick. Chromate anions are commonly used to treat metal surfaces in this fashion. The usual method of application is from aqueous solution; chromic acid being a typical form in which the chromate anions are applied.

It has been proposed to treat metals with aqueous solutions of chromium compounds containing oxides such as alumina. Thus GB 2 89 816 discloses a process for producing a wear resistant layer on metals by dipping in a solution containing $CrO_3$ and alumina followed by a baking step to build up a layer of a ceramic coating.

Metal surfaces are often bonded together by adhesives and there is a need to improve the adhesive strength of such bonds and in particular to reduce the loss of adhesive strength which can take place when metal articles bonded together by adhesives are placed in hot and wet environments. Disclosures concerning the building up of ceramic layers on metal surfaces for wear or corrosion protection give no useful guidance on how to improve the retention of bond strengths in metal surfaces bonded by adhesives.

GB 2 071 070B discloses a corrosion inhibitor made by subjecting alumina particles having surface hydroxyl groups to ion exchange so as to replace the hydroxyl groups by chromate anions. The alumina particles are used as anti-corrosion pigments in paints. There is no suggestion that the particles can be used in a metal treatment aimed at improving the properties of bonds between metal surfaces.

We have now found an aqueous treatment for metal surfaces which enables improved bond properties to be obtained in subsequently applied adhesives.

According to the present invention the process for the treatment of a metal oxide layer, the metal oxide layer being in contact with a metal in the bulk state and being formed by exposure to oxygen in the bulk state, which treatment process comprises treating the metal oxide layer with an aqueous medium containing a chromium compound and alumina characterised in that any chromium present in solution in the aqueous medium is released from alumina particles which have been previously prepared so as to have chromate anions releasably bound to the alumina.

The process of the present invention uses alumina particles having chromate anions releasably bound to the alumina as a source of chromate. This gives a low concentration of chromate and aluminium ions which is believed to be desirable in giving surfaces to which adhesives can subsequently be applied.

The process of the present invention is applied to a metal surface having an oxide layer formed by contact with the atmosphere. This may be termed the native metal oxide layer as opposed to layers formed by special treatments such as conversion coating processes.

According to a further aspect of the present invention the process for bonding a metal object to a second object by contacting the metal object with a polymeric adhesive and bringing the second object into contact with the adhesive, in which process the metal object has an outer layer of oxide in contact with metal in the bulk state and which layer has been formed by exposure of the bulk metal to oxygen, is characterised in that at least part of the metal oxide layer has been treated with an aqueous medium containing a chromium compound and alumina, and any chromium present in the aqueous medium is released from alumina particles which have been previously prepared so as to have chromate anions releasably bound to the alumina.

According to a further aspect of the present invention a structure comprising a metal object bonded to a second object by means of an intervening layer of polymeric adhesive, the metal object comprising a native metal oxide layer in contact with the adhesive, is characterised in that at least part of the metal oxide layer has been treated with an aqueous medium containing a chromium compound and alumina, and any chromium compound present in the aqueous medium was released from alumina particles which have been previously prepared so as to have chromate anions releasably bound to the alumina.

A metal surface exposed to the air has a naturally occuring (native) oxide layer. This naturally occuring oxide layer is formed by oxidation of the surface metal atoms and all common metals except gold are found to possess such a layer. Such metals include iron, steel, aluminium, zinc and copper. Only under extreme conditions (e.g. high vacuum, inert gas atomsphere) can an oxide layer be absent from a metal surface. In all common working environments, the oxide layer will be present, but its thickness will vary according to the metal and the conditions it is subjected to. Typically the oxide layer on steel at ambient conditions will have an average thickness in the range 2 to 20 nm.

References to metal surfaces will necessarily be taken to include references to metal oxide surfaces.

The metal surface in the present invention may have undergone an initial cleaning step, for the purposes, for example, of removing temporary protective materials such as oil. This cleaning step may be by chemical means (alkaline wash) or mechanical means (abrading); such methods are well known in the art. The metal surface of the present invention will be a non-conversion coated surface.

The present invention is applicable to most metals, in particular steel, aluminium and zinc, preferably steel more preferably cold rolled mild steel.

The present invention is carried out using an aqueous suspension of alumina which has chromate anions chemcially bound to its surface. Such an alumina may be referred to as "chromate alumina". The chromate exchanged alumina prepared by the method described in patent GB 2 071 070B is suitable for use in the present invention.

The process of the present invention is preferably carried out with an aqueous medium containing as an active ingredient substantially only alumina particles having chromate releasably bound to alumina. Thus additional materials known for metal treatment are preferably absent from the medium.

The alumina will have a chromium content (as determined by XRF) which can be in the range 0.1 - 6% w w, preferably in the range 1 - 5% w·w, more preferably in the range 2 - 3% w/w. In general the alumina will preferably have a high level of surface hydroxyl groups. Examples of suitable aluminas are the commercially available activated aluminas sold under the name "Camag" and defined as having a Brickman Activity 1 for chromatography and F1 aluminas sold by the Aluminium Company of America.

Suitable particle sizes may be up to 100 micrometres diameter. The preferred particle size range is 2 - 10 micrometres. The chromate anion is releasably bound to the alumina. When the alumina is suspended in water, the chromate anion is released and has a finite concentration in solution.

The contact time between the aqueous suspension and the metal surface can also be important. The contact time at ambient temperature should normally be 10s-19 mins, preferably in the range 1-8 mins, more preferably in the range 3-7 mins.

The treatment with the aqueous medium may be carried out over a moderately wide range of temperatures for example 10°C to 60°C. Temperatures close to ambient temperature e.g. 15° to 30°C are convenient.

The quantity of alumina particles having releasable chromate anions present in the aqueous medium may for example be in the range 0.1% wt to 20% wt, preferably 2% wt to 7% wt based on weight of aqueous medium.

The thickness of the chromate alumina treated oxide layer is of importance since a relatively thick layer would be more likely to fail than a thin layer within the layer itself. This would effectively weaken the adhesive/metal surface interface. The thickness of the treated oxide layer will preferably be in the range 1-20 nm, more preferably in the range 2-10 nm.

The treatment of metal surfaces with an aqueous suspension of chromate alumina is suitably used in conjunction with polymeric adhesives. Examples of such adhesives are epoxy resins, polyurethane resins, vinyl resins, and phenolic resins, preferably epoxy resins.

The treatment with the aqueous medium is used to increase adhesive bond strengths and to enhance the durability of adhesive bonds particularly in aqueous environments. A typical structure using the present invention comprises two pieces of metal treated according to the invention, and bonded together using an adhesive, the adhesive contacting the chromate alumina treated metal surface.

The specification refers to bonding a metal object to a second object. The objects may be two separate articles, e.g. two metal sheets. For the purpose of this specification an object may be part of an article, e.g. opposed ends of a steel sheet which are joined to make a cylinder.

The adhesion of a surface coating to a metal surface can also be enhanced by treatment of the metal surface according to the present invention.

It is preferred to apply the adhesive or suface coating to a dry surface; it is therefore preferred to follow the treatment with the chromate alumina suspension with a drying step. The present invention is not concerned with forming thick coatings by baking on layers of material. The drying step may thus be carried out at relatively low temperatures, e.g. 10° to 100°C. As the objective is not to build up a thick layer of material on the metal the aqueous medium may be allowed to drain from the metal before drying. The metal may also be rinsed with water before any drying step.

The invention is now illustrated with reference to the following Examples.


Adhesion Test Method

3

Mild steel test pieces (pretreated as described below) were bonded with epoxy adhesive to determine the adhesive properties of treated and untreated steel. The test pieces measured 2.54 cm by 6.35 cm and were cut from 0.75 mm steel paint test panels supplied by the Pyrene Chemical Services Ltd. This is grade CR1 cold rolled steep polished on one side only and supplied coated with a protective oil to prevent rusting. The adhesive was a simple commercially available epoxy resin; Shell Epikote 828 cured with DMP30 hardener (Anchor Chemical Company). 10 parts adhesive were mixed with one part of hardener (by weight) immediately prior to use. The steel was cleaned in an ultrasonic solvent degreasing bath (1,1,1-trichloroethylene) to remove the protective oil prior to any treatment. 2.54 cm square lap bonds were prepared by bonding the ends of the polished sides of two test pieces together with a 2.54 cm overlap. Bond line thickness was approximately 1 mm. The adhesive was then cured at 80°C for 1 hour.

A total of 8 such samples were prepared for each treatment. Of these, four were subjected to a durability test (400 hours immersion in distilled water at 50°C) to determine the effect of hot wet environments on joint strength. The bond strength of the joints was determined using an Instron materials testing machine in which samples are pulled apart at constant speed and the load required to cause failure is recorded. The bonded samples are 10.16 cm long (2x6.35 cm-2.54 cm overlap), of this 1.27 cm at each end is used by the test machine grips to hold the sample. The samples were pulled at 0.5 mm/minute under ambient conditions. The durability (water immersion) samples were tested immediately after removal from the water.

The results of the adhesion test are recorded as average failure strengths in Table 1. The percentage loss of adhesion on water immersion is also given.

Test pieces were treated according to the invention as indicated below; these pieces were then tested according to the above method. Comparative tests were carried out as described. Results are given in Table 1.

## Preparation of Chromate Alumina

500kg of water are charged to a reaction vessel at ambient temperature and the agitator started. 500kg of $Al_2O_3$ are then added together with a sufficient amount of additional water to maintain effective agitation. The pH is monitored and $CrO_3$ added steadily such that the pH does not fall below 1. Agitation is maintained until the pH effectively stops rising. The mixture is left standing for 30 minutes. The product is then washed with deionised water to a wash water conductivity of 1,000 micro ohms per cm. The washing process involves slurrying with fresh water allowing the product to settle, decantation of the mother liquor then repeating the process. The product is finally reslurried to a solids content suitable for spray-dried. The product is micronised in a large ball mill to a particle size of less than 10 microns and then stored in airtight containers.

## Example 1 (according to the invention)

Steel test pieces as described above were treated by immersion in a 5% wt suspension of chromate alumina in water (100 mls per plate) for 3 minutes followed by three 1 minute washes in distilled water to remove excess material, then dried by dabbing on a tissue. Adhesive bonds were prepared and tested as described above. The results of initial strength and durability testing are given in Table I.

## Comparative Test A (not according to the invention)

Steel test pieces as described above were treated as described in Example 1 but the pieces were immersed in distilled water instead of an aqueous suspension of chromate alumina. Adhesive bonds were prepared and tested as in Example 1. Results of the testing are given in Table I.

## Comparative Example B (not according to the invention)

Steel test pieces as described above were treated as described in Example 1 but the pieces were immersed in 0.1 M chromic acid instead of an aqueous suspension of chromate alumina. Adhesive bonds were prepared and tested in Example 1. Results of the testing are given in Table I.

Comparative Example C (not according to the invention)

Steel test pieces as described above were treated as described in Example 1 but using alumina that did not have chromate anions chemically bound to its surface. Adhesive bonds were prepared and tested as in Example 1. Results of the resting are given in Table I.

Comparative Example D (not according to the invention)

Steel test pieces were left untreated. Adhesive bonds were prepared and tested as in Example 1. Results of the testing are given in Table I.

TABLE I

| Example | Initial Strength (KN) | 400 h Strength (KN) | % Loss |
|---------|------------------------|----------------------|--------|
| 1       | 3.67                   | 3.20                 | 13     |
| A       | 3.60                   | 2.30                 | 36     |
| B       | 3.10                   | 2.30                 | 26     |
| C       | 3.34                   | 2.24                 | 33     |
| D       | 3.33                   | 2.45                 | 26     |

Alcoa, Epikote and Instron are all registered Trade Marks.

## Claims

1. The process for the treatment of a metal oxide layer, the metal oxide layer being in contact with a metal in the bulk state and being formed by exposure to oxygen in the bulk state, which treatment process comprises treating the metal oxide layer with an aqueous medium containing a chromium compound and alumina is characterised in that any chromium present in solution in the aqueous medium is released from alumina particles which have been previously prepared so as to have chromate anions releasably bound to the alumina.

2. The process according to claim 1 wherein the alumina has a chromium content in the range 1-5% by weight.

3. The process according to either of claims 1 or 2 wherein the alumina has a particle size of up to 100 micrometres.

4. The process according to any one of the preceding claims wherein the alumina has a particle size in the range 2 to 10 micrometres.

5. The process according to any one of the preceding claims wherein the aqueous medium contains as effective ingredient substantially only alumina particles having chromate releasably bound to the alumina.

6. The process according to any one of the preceding claims wherein the aqueous medium is brought into contact with the metal oxide layer for a time in the range 10 seconds to 10 minutes.

7. The process according to claim 6 wherein the time is in the range 1 to 8 minutes.

8. The process according to claim 7 wherein the time is in the range 3 to 7 minutes.

9. The process according to any one of the preceding claims wherein the quantity of alumina particles having releasable chromate anions present in the aqueous medium is in the range 0.1% to 20% weight, based on weight of aqueous medium.

10. The process according to any one of the preceding claims in which the metal oxide layer is dried after the treatment with the aqueous medium.

11. The process according to any one of the preceding claims wherein the metal oxide layer is dried at a temperature in the range $10°$ to $100°$C.

12. The process according to either of claims 10 or 11 wherein the aqueous medium is allowed to drain from the metal oxide layer before drying.

13. The process for bonding a metal object to a second object by contacting the metal object with a

5

polymeric adhesive and bringing the second object into contact with the adhesive, in which process the metal object has an outer layer of oxide in contact with metal in the bulk state and which layer has been formed by exposure of the bulk metal to oxygen, characterised in that at least part of the metal oxide layer has been treated with an aqueous medium containing a chromium compound and alumina, and any chromium present in the aqueous medium is released from alumina particles which have been previously prepared so as to have chromate anions releasably bound to the alumina.

14. A process according to claim 13 wherein the adhesive is an epoxy, polyurethane, vinyl, or phenolic adhesive.

15. The process according to claim 14 wherein the adhesive is an epoxy adhesive.

16. The process according to any one of the preceding claims wherein the metal is steel.

17. A structure comprising a metal object bonded to a second object by means of an intervening layer of polymeric adhesive, the metal object comprising a native metal oxide layer in contact with the adhesive, characterised in that at least part of the metal oxide layer has been treated with an aqueous medium containing a chromium compound and alumina, and any chromium compound present in the aqueous medium was released from alumina particles which have been previously prepared so as to have chromate anions releasably bound to the alumina.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | GB-A-2 189 816 (K.K. TOSHIBA) <br> * Abstract; page 2, lines 53-63 * <br> --- | | C 23 C 22/73 <br> C 09 J 5/02 |
| A,D | GB-A-2 071 070 (BP) <br> * Abstract * <br> --- | | |
| A | US-A-4 623 591 (R.A. PIKE) <br> * Abstract * <br> ----- | | |

TECHNICAL FIELDS SEARCHED (Int. Cl.5)

C 23 C
C 09 J
B 05 D

The present search report has been drawn up for all claims

| Place of search | Date of completion of the search | Examiner |
|---|---|---|
| THE HAGUE | 06-11-1989 | GIRARD Y.A. |